# EUROPÄISCHE PATENTSCHRIFT

(11) **EP 0 293 631 B1**
(45) Veröffentlichungstag und Bekanntmachung des Hinweises auf die Patenterteilung: **10.11.1993**
(21) Anmeldenummer: 88107316.7
(22) Anmeldetag: 06.05.1988
(51) Int. Cl.: F16F 1/36, F41H 1/02, F41H 5/00

(54) **Einrichtung zum Verbinden eines ersten Bauteiles relativ geringer Masse mit einem zweiten Bauteil relativ grosser Masse und Verwendung dieser Einrichtung**
Device for connecting a first constructional part of relatively low mass to a second constructional part of relatively heavy mass and application of such a device
Dispositif de fixation d'un premier élément de construction à masse relativement petite sur un deuxième élément de construction à masse relativement grande et application du dispositif

(30) Priorität: 01.06.1987 DE 8707802 U
(43) Veröffentlichungstag der Anmeldung: 07.12.1988
(73) Patentinhaber: HÜBNER Gummi- und Kunststoff GmbH, D-34123 Kassel (DE)
(72) Erfinder:
(74) Vertreter: Walter, Helmut, Dipl.-Ing.

(56) Entgegenhaltungen:
- DE-A- 2 310 560
- FR-A- 951 846
- FR-A- 1 260 978
- GB-A- 482 260
- US-A- 2 830 780
- US-A- 3 809 427
- US-A- 3 881 767
- PATENT ABSTRACTS OF JAPAN, Band 4, Nr. 128 (M-31)[610], 9. September 1980;& JP-A-55 86 936 (SHOWA DENSEN DENRAN K.K.) 01-07-1980

## Beschreibung

Die Erfindung bezieht sich auf eine Einrichtung zum Verbinden eines ersten Bauteils relativ geringer Masse mit einem zweiten Bauteil relativ großer Masse gemäß dem Gattungsbegriff des Anspruchs 1.

Gattungsbildend ist die Verbindungseinrichtung nach der FR-A- 951 846.

Aufgabe der Erfindung ist es, einen Gummipuffer aufzuzeigen, der in besonders zweckmäßiger Weise dazu verwendet werden kann, schwingend zu lagernde Teile aufzunehmen oder als Abstandshalter zwischen gegeneinander bewegliche Flächen eingebaut zu werden. Aufgabe der Erfindung ist es vor allem, eine für diesen Zweck geeignete Einrichtung zu schaffen. Schließlich zeigt die Erfindung eine besonders zweckmäßige Anwendungsmöglichkeit auf.

Die Erfindung ergibtn sich aus den Merkmalen des Anspruches 1 oder den Merkmalen des Anspruches 14.

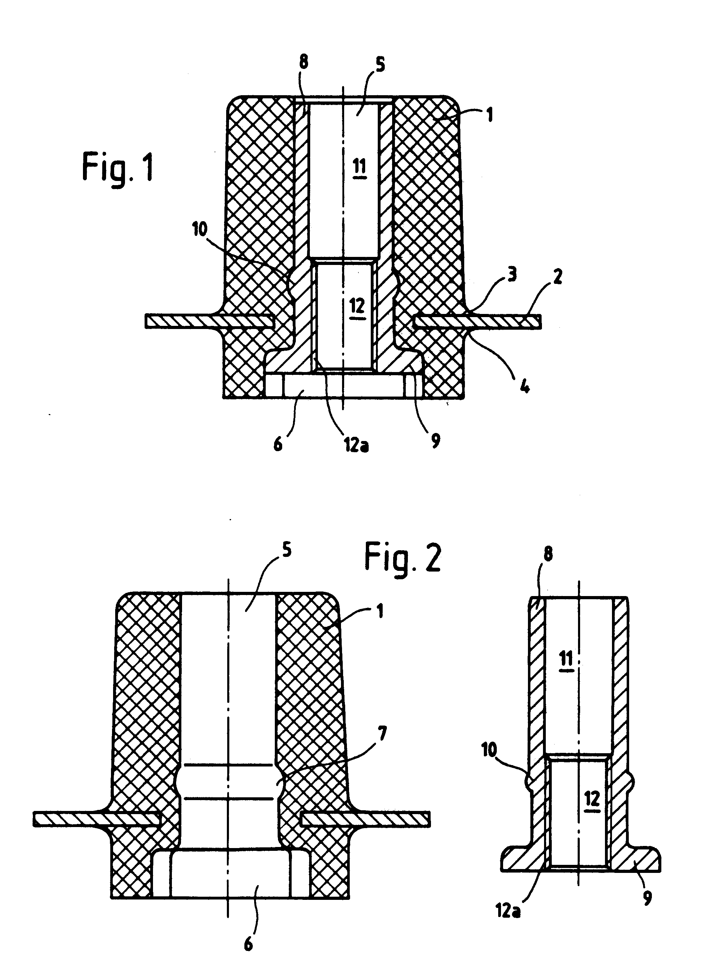

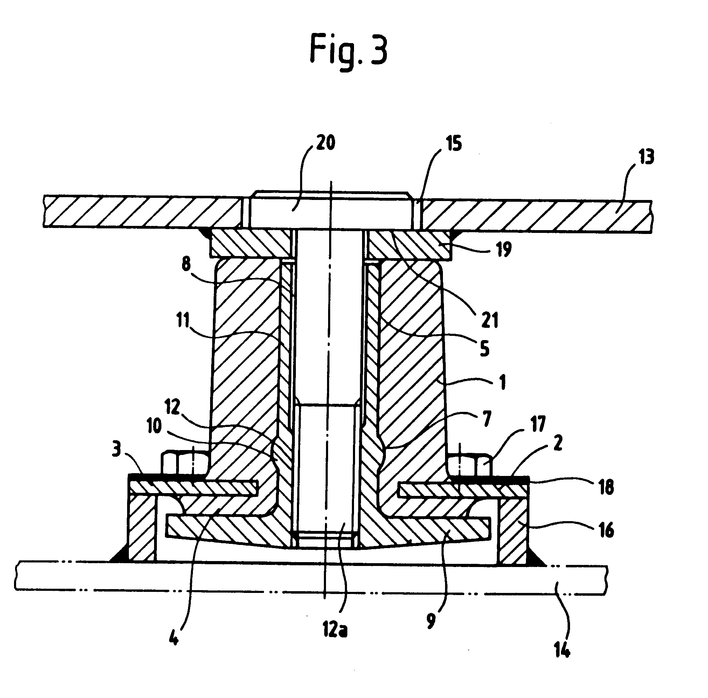

Die Erfindung wird nachfolgend anhand der Zeichnung beschrieben. In der Zeichnung ist in Fig.1 ein erfindungsgemäßer Gummipuffer in einer ersten Ausführungsform als Mittellängsschnitt dargestellt, in Fig.2 sind die beiden Teile des erfindungsgemäßen Gummipuffers gemäß Fig.1 als Mittellängsschnitte dargestellt, nämlich das Gummifederelement und die Gewindebuchse. In Fig.3 ist eine weitere Ausführungsform des erfindungsgemäßen Gummipuffers im eingebauten Zustand und damit die erfindungsgemäße Einrichtung wiederum als Mittellängsschnitt dargestellt. Das Gummifederelement 1 besteht aus einem elastischen Material, insbesondere Gummi- weshalb im Zusammenhang mit der Erfindung von Gummi gesprochen wird, wenn ein elastisches Material gemeint ist, also beispielsweise auch ein Elastomer an die Stelle von eigentlichem Gummi treten kann.

Das Gummifederelement ist zylindrisch und vorzugsweise schwach kegelig nach dem in der Zeichnung oberen Ende hin sich verjüngend ausgebildet. Nahe dem anderen, in der Zeichnung unteren und demzufolge Ende mit dem etwas größeren Durchmesser ist in dem Gummifederelement 1 eine Ringnut vorgesehen, deren Ränder etwas nach außen lippenförmig aufgestülpt sind. In dieser Ringnut ist ein Ringflansch 2 festgelegt, der demzufolge von der oberen Ringnutlippe 3 überlagert und von der unteren Ringnutlippe 4 unterlegt wird. Der Ringflansch 2 besteht aus Metall oder einem Kunststoff mit entsprechenden Eigenschaften. Konzentrisch um die Längsachse des Gummifederelementes 1 ist ein ebenfalls im wesentlichen zylinderischen Längsloch 5 vorgesehen. Dieses Längsloch endet bei der Lösung nach Fig.1,2 am in der Zeichnung unteren Ende in einer Erweiterung 6, die nach diesem Ende des Gummifederelementes hin ohne nochmalige Verengung, d.h. mit gleichbleibendem Durchmesser offen ist. Während das Loch 5 rund ist, ist die Erweiterung vorzugsweise ein Viel- vorzugsweise Vierkant. Der Durchmesser der Grundkontur der Erweiterung 6, bei einem Vielkant der Durchmesser des Größtkreises entspricht zumindest etwa dem Innendurchmesser des erstgenannten Ringflansches 2, dessen Außendurchmesser deutlich größer als der (größte) Außendurchmesser der Gummifederelementes 1 ist.

Die Ringnut zur Aufnahme des erstgenannten Ringflansches 2 liegt zwischen der Innenfläche der Erweiterung 6 bzw. der Einmündung des Loches 5 in die Erweiterung 6 und einer zweiten Ringnut 7. Während die Ringnut für den Ringflansch 2 rechteckigen Querschnitt hat, um den Ringflansch spiellos und sogar mit einer vorgegebenen Vorspannung aufzunehmen, hat die zweite Ringnut 7 einen bogenförmigen Querschnitt.

In das Längsloch 5 ist eine Hülse 8 drehfest eingesetzt, deren oberer Abschnitt 11 einen etwas größeren Innendurchmesser hat als der untere Abschnitt 12, der mit einem Schraubgewinde 12a versehen ist. Die Hülse 8 hat am unteren Ende als Verdrehsicherung und zur Anlage an der Unterseite der Hülse 8 einen Radialflansch 9, dessen Außenkontur und Durchmesser der Außenkontur und dem Durchmesser der Erweiterung 6 entspricht. Außerdem ist die Hülse 8 mit einem im Querschnitt balligen Ringwulst 10 versehen, der dem Flansch 9 in der Weise zugeordnet ist, wie die Ringnut 7 der Erweiterung 6 zugeordnet ist und dessen Querschnitt in etwa dem Querschnitt der Ringnut 7 entspricht.

Zum Zusammenbau der beiden Teile des Puffers wird das Gummifederelement 1 soweit aufgeweitet, daß die Hülse 8 eingeführt werden kann und nach Beendigung der Aufweitung mit Preßsitz in dem Gummifederelement 1 gehalten ist (Fig.1). Der Ringwulst 10 liegt in der Ringnut 7, der Radialflansch 9 liegt in der Erweiterung 6 derart, daß seine innere Endfläche an der Innenfläche der Erweiterung 6 anliegt.

Bei dieser Ausführungsform des erfindungsgemäßen Gummipuffers überdecken sich Ringflansch 2 und Radialflansch 9 in radialer Richtung nicht oder allenfalls in geringem Maße.

Bei der zweiten Ausführungsform (Fig.3) des erfindungsgemäßen Gummipuffers hat der Radialflansch 9 einen deutlich größeren Durchmesser als bei der Ausführungsform gemäß Fig.1,2. Außerdem weist das Gummifederelement 1 keine Erweiterung 6 des Längsloches 5 auf, und der Radialflansch 9 liegt auf der gesamten unteren Stirnseite des Gummifederelementes 1 auf und ragt mit einem kreisförmigen Rand über die ebenfalls kreisförmige Stirnfläche des Gummifederelementes 1 hinaus.

Der Einbau des erfindungsgemäßen Gummipuffers als Teil einer erfindungsgemäßen Einrichtung wird nachfolgend anhand der Ausführungsform gemäß Fig.3 beschrieben.

Ein plattenförmiges erstes Bauteil 14 relativ geringer Masse soll gegenüber einem beliebigen zweiten Bauteil 13 relativ großer Masse festgelegt werden, wobei es sich beispielsweise bei dem zweiten Bauteil 13 um einen Teil einer Fahrzeugkarrosserie handeln soll, die mit einer Panzerplatte als plattenförmigem, ersten Bauteil 14 beschußsicher gemacht sein soll. Für die Festlegung dient eine angemessene Mehrzahl von erfindungsgemäßen Einrichtungen, von denen jedoch nur eine im Einbauzustand dargestellt und beschrieben ist.

Im Bereich des Einbaues der Einrichtung weist das Bauteil 13 ein Loch 15 auf und ist auf der dem Bauteil 13 zugekehrten Seite auf dem Bauteil 14 ein Ring 16 vorgegebener Höhe angeschweißt. Loch 13 und Ring 16 sind achsgleich einander zugeordnet. In den von dem Ring 16 umschlossenen Freiraum wird, noch ehe das Bauteil 14 dem Bauteil 13 zugeordnet ist, die erfindungsgemäße Einrichtung mit dem Flansch 9 und dem unteren Ende des Gummifederelementes 1 soweit eingeführt, daß der Ringflansch 2 auf dem oberen Rand des Ringes 13 zu liegen kommt und in dieser Lage relativ zum Bauteil 14 festgelegt wird, indem Ringflansch 2 und Ring 16 beispielsweise miteinander dauerhaft verklebt werden oder lösbar miteinander verbunden werden, indem beispielsweise der Ring 16 am oberen Ende nach innen gerichtete Nocken und der Ringflansch 2 entsprechende Aussparungen aufweisen, so daß beim Einsetzen die Nocken durch die Aussparungen axial hindurchtreten können und nach einer Drehung der erfindungsgemäßen Vorrichtung um ihre Längsachse die Nocken des Ringes 16 über den nicht ausgesparten Abschnitten des Ringflansches 2 liegen und beide Teile in dieser Position mit Schrauben 17 miteinander verbunden werden können, oder indem die Wandstärke des Ringes 16 so bemessen ist, daß er Gewindelöcher aufweisen kann, in die die Schrauben 17 eingeschraubt werden, während sie mit ihren Köpfen über Durchgangslöchern in dem Ringflansch 2 auf dessen Oberseite aufliegen. Im Fall der einen oder anderen lösbaren Verbindung ist zwischen der Oberseite des Ringflansches 2 und den Unterseiten der Schraubenköpfe 17 eine Unterlegscheibe 18 eingelegt.

Ist auf diese Weise die Einrichtung aus dem Gummifederelement 1, der Hülse 8 und dem Ringflansch 2 dem Bauteil 14 in einer der beschriebenen oder einer anderen Weise lösbar oder nicht lösbar zugeordnet, so wird auf die Oberseite des Gummifederelementes 1 eine Ringscheibe 19 aufgelegt, die aber auch bereits vorher auf das Gummifederelement aufgelegt und mit dieser verbunden, beispielsweise verklebt worden sein kann. Der Außendurchmesser der Scheibe 19 ist deutlich größer als der Durchmesser des Loches 15 des Bauteiles 13, während der Innendurchmesser der Ringscheibe 18 etwa dem Durchmesser des Abschnittes 11 des Längsloches 5 der Hülse 8 entspricht. Ist die insoweit vorbereitete erfindungsgemäße Einrichtung mit dem ersten Bauteil 14 über die Scheibe 19 an das zweite Bauteil 13 angelegt, so wird die Schraube 20 in das Längsloch 5 eingeführt und in dessen Gewindeabschnitt 12 solange eingeschraubt, bis der Kopf der Schraube 20 in dem Loch 15 weitestgehend verschwunden ist, unter Zwischenschaltung einer Federscheibe 21 auf der Ringscheibe 19 aufliegt und durch Festlegung des Abstandes zwischen dem Radialflansch 9 und dem Ringflansch 2 bzw. des ersten Bauteiles 14 gegenüber dem zweiten Bauteil 13 die Lage des leichteren Bauteiles 14 gegenüber dem schwereren Bauteil 13 festgelegt ist und die Vorspannung in dem Gummifederelement 1 bestimmt. Zumindest durch die aufgebrachte axiale Vorspannung ist der Außendurchmesser des Gummifederelementes 1 im Bereich zwischen Ringflansch 2 und ihm näherer Stirnseite des Federelementes 1 bzw. Radialflansch 9 größer als der Außendurchmesser des Gummifederelementes 1 im Bereich zwischen dem Ringflansch 2 und der anderen Stirnseite des Gummifederelementes 1. Soweit es die Vorspannung zuläßt, ist das Bauteil 14 relativ zum Bauteil 13 aus einer definierten Lage heraus verstellbar. Da keine metallische Verbindung zueinander besteht, sind die beiden Teile gegeneinander schwingungs- und temperatur-isoliert. Auf das Bauteil 14 senkrecht auftreffende Energie wird in dem Gummifederelement 1 bis zu einem relativ hohen Wert aufgenommen und nicht in das Bauteil 13 weitergeleitet. Die Festlegung des Bauteiles 14 am Bauteil 13 kann nach entsprechender Vorbereitung des Bauteiles 14 allein von der Außenseite des Bauteiles 13 aus erfolgen, das Bauteil 14 ist im Bereich der Befestigung nicht unterbrochen, so daß die Verbindung in besonderem Maße dafür geeignet ist, eine Panzerplatte 14 lösbar einer Fahrzeugstruktur 13 zuzuordnen. Die Einrichtung kann Scherkräfte aufnehmen, ohne daß die Gefahr besteht, daß sie beschädigt wird. Im Fall eines Brandes kann zwar das Gummifederelement 1 verbrennen die Befestigung des Bauteiles 14 an dem Bauteil 13 würde aber auch dann grundsätzlich erhalten bleiben.

## Patentansprüche

1. Einrichtung zum elastischen Verbinden eines flächigen ersten Bauteils (14) geringer Masse mit einem zweiten beliebigen Bauteil (13) relativ großer Masse unter Verwendung eines Elementes (1) aus federelastischem Material, das mit den beiden Bauteilen (13,14) lösbar verbunden ist, wobei die Verbindung unter Zuhilfenahme einer Schraube (20) erfolgt, die in eine von dem Element (1) aus federelastischem Material aufgenommene Gewindehülse (8) eingeschraubt ist, und wobei das Element (1) im wesentlichen von zylindrischer Form ist und eine in seiner Längsrichtung verlaufende, durchgehende, zylindrische Öffnung (5) aufweist, in der Öffnung (5) die Gewindehülse (8) fest angeordnet ist und an ihrem einen Ende mit einem Radialflansch (9) an der dem ersten Bauteil (14) zugewandten Stirnseite des Elementes (1) anliegt, während die in den Gewindeabschnitt (12) der Gewindehülse (8) von der anderen, dem zweiten Bauteil (13) zugewandten Stirnseite des Elementes (1) her durch eine Öffnung im zweiten Bauteil (13) hindurchgeführte Schraube (20) eingeschraubt ist, die das Element (1) mit dieser Stirnseite über den Radialflansch (9) an der Innenseite des zweiten Bauteils (13) unter axialer Vorspannung anlegt, wobei nahe der dem ersten Bauteil (14) zugewandten Stirnseite des Elementes (1) in diesem ein nach außen überstehender Flansch (2) gehalten ist, der mit dem ersten Bauteil (14) verbunden ist, wobei zwischen dem Flansch (2) und dem ersten Bauteil (14) ein Abstand in Längsrichtung des Elementes (1) besteht, **dadurch gekennzeichnet**, daß das Element (1) mit dem ersten Bauteil (14) entweder fest oder lösbar verbunden ist, daß eine vorgefertigte Baueinheit das Element (1) aus einstückigem federelastischem Material, die zylindrische Gewindehülse (8) und den als Ringflansch (2) ausgebildeten Flansch enthält, wobei das Element (1) aus federelastischem Material (1) im nicht vorgespannten Zustand den Ringflansch (2) so aufnimmt, daß dessen Innendurchmesser größer als der Außendurchmesser der Gewindehülse (8) und kleiner als der Außendurchmesser des Elementes (1) ist, während sein Außendurchmesser größer als der Außendurchmesser des Elementes (1) ist und daß weiter zur Festlegung der Gewindehülse (8) innerhalb des Elementes (1) diese Gewindehülse (8) verdrehfest in der Öffnung (5) des Elementes (1) sitzt und daß schließlich das erste Bauteil (14) in Achsrichtung des zylindrischen Elementes (1) gesehen dieses abdeckt.

2. Einrichtung nach Anspruch 1, **dadurch gekennzeichnet**, daß zur Festlegung der Gewindehülse (8) innerhalb des Elementes (1) diese Gewindehülse (8) mit dem nach außen gerichteten Radialflansch (9) am einen Ende in einer endseitig am Element (1) ausgebildeten radialen Erweiterung (6) der Öffnung (5) im Element (1) liegt, und die Erweiterung (6) und der Radialflansch (9) gleich dimensionierte Vielecke sind.

3. Einrichtung nach Anspruch 1 oder 2, **dadurch gekenn**zeichnet, daß zur Festlegung der Gewindehülse (8) innerhalb des Elementes (1) diese Gewindehülse (8) mit Preßsitz in der Öffnung (5) des Elementes (1) sitzt.

4. Einrichtung nach einem der Ansprüche 1 bis 3, **dadurch gekennzeichnet**, daß ein Ringwulst (10) an der Gewindehülse (8) in eine hierzu nachgeformte Ringnut (7) in der Öffnung (5) des Elementes (1) eingreift.

5. Einrichtung nach einem der Ansprüche 1 bis 4, **dadurch gekennzeichnet**, daß die Schraube (20) mit ihrem Kopf in einer Öffnung (15) des zweiten Bauteils (13) liegt und das Element (1) über eine Scheibe (19) an die Innenseite des zweiten Bauteils (13) anlegt.

6. Einrichtung nach Anspruch 5**, gekennzeichnet** durch einen axialen Abstand zwischen der Gewindehülse (8) und der Scheibe (19).

7. Einrichtung nach einem der Ansprüche 1 bis 6, **dadurch gekennzeichnet**, daß der Ringflansch (2) lösbar mit einem Ring (16) verbunden ist, der dem ersten Bauteil (14) zugeordnet ist und den Teil des Elementes (1) mit dem Radialflansch (9) umschließt.

8. Einrichtung nach einem der Ansprüche 1 bis 4, **dadurch gekennzeichnet**, daß der Ringflansch (2) aus Metall oder einem starren Kunststoff besteht.

9. Einrichtung nach Anspruch 8, **dadurch gekennzeichnet**, daß das Element (1) den Ringflansch (2) auf dessen Ober- und Unterseite mit je einer lippenförmigen, ringförmigen Ausstülpung (3,4) überlagert bzw. unterlegt.

10. Einrichtung nach einem der Ansprüche 1 bis 9, **dadurch gekennzeichnet**, daß die zylindrische Öffnung (5) des Elementes (1) nach beiden Enden des Elementes hin offen ist.

11. Einrichtung nach einem der Ansprüche 5 bis 10, **dadurch gekennzeichnet**, daß der Außendurchmesser des Radialflansches (9) größer ist als der Innendurchmesser des Ringflansches (2).

12. Einrichtung nach Anspruch 1, **dadurch gekennzeichnet**, daß der Durchmesser des Elementes (1) im Bereich zwischen dem Ringflansch (2) und dem näheren Ende des Elementes (1) größer ist als der Durchmesser des Gummifederelementes im Bereich zwischen dem Ringflansch (2) und dem entfernteren Ende des Elementes (1), daß der Außendurchmesser des Radialflansches (9) größer ist als der größere Außendurchmesser des Elementes (1) und daß die Gewindehülse (8) mit dem Radialflansch (9) an der ebenen Außenseite des Elementes (1) anliegt.

13. Einrichtung nach einem der Ansprüche 1 bis 12, **dadurch gekennzeichnet**, daß die Längsbohrung der Gewindehülse (8) zwei Abschnitte (11,12) mit unterschiedlichen Innendurchmessern hat, von denen der Abschnitt mit dem kleinere Innendurchmesser (12) dem Ende des Gummifederelementes (1) zugeordnet ist, dem der erste Ringflansch (2) und der Radialflansch (9) der Gewindehülse (8) näher liegen und dieser Abschnitt mit einem Schraubgewinde versehen ist.

14. Verwendung einer Einrichtung gemäß mindestens einem der Ansprüche 1 bis 13 zur Befestigung einer Panzerplatte als Bauteil (14) relativ geringer Masse an einer Fahrzeugstruktur als Bauteil (13) relativ großer Masse.

## Claims

1. A system for elastically connecting a flat first component (14) of low mass to any second component (13) of relatively heavy mass, using an element (1) of resiliently elastic material detachably connected to the two components (13, 14),, the connection being made with the aid of a screw (20) which is screwed into a tapped bush (8) received by the element (1) of resiliently elastic material, the element (1) being of substantially cylindrical shape and having a continuous cylindrical opening (5) extending in its longitudinal direction, the tapped bush (8) being fixed in the opening (5) and bearing, at one end, by a radial flange (9), against that end face of the element (1) which faces the first component (14), while the screw (20) is screwed into the tapped portion (12) of the tapped bush (8) and extends through an opening in the second component (13) from the other end face of the element (1) facing the second component (13), such screw applying the element (1) by said end face via the radial flange (9) against the inside of the second component (13) with axial prestressing, an outwardly projecting flange (2) being held in the element (1) near the end face thereof facing the first component (14) and being connected to the first component (14), there being a space in the longitudinal direction of the element (1) between the flange (2) and the first component (14), characterised in that the element (1) is either fixedly or detachably connected to the first component (14), in that a prefabricated module comprises the element (1) of one-piece resiliently elastic material, the cylindrical tapped bush (8) and the flange constructed as an annular flange (2), the element (1) of resiliently elastic material (1) so accommodating the annular flange (2) in the non-prestressed state that its inside diameter is larger than the outside diameter of the tapped bush (8) and smaller than the outside diameter of the element (1), while its outside diameter is larger than the outside diameter of the element (1) and in that in order to fix the tapped bush (8) inside the element (1) the tapped bush (8) fits in the opening (5) in the element (1) so as to be secure against turning and in that finally the first component (14) covers the cylindrical element (1) as considered in the axial direction thereof.

2. A system according to claim 1, characterised in that to fix the tapped bush (8) inside the element (1) said tapped bush (8) lies with the outwardly directed radial flange (9) at one end in a radial widening (6) formed in the opening (5) at the end of the element (1), and the widening (6) and the radial flange (9) are polygons of the same dimensions.

3. A system according to claim 1 or 2, characterised in that to fix the tapped bush (8) inside the element (1) said tapped bush (8) fits with a force fit in the opening (5) of the element (1).

4. A system according to any one of claims 1 to 3, characterised in that an annular bead (10) on the tapped bush (8) engages in a matching annular groove (7) in the opening (5) of the element (1).

5. A system according to any one of claims 1 to 4, characterised in that the screw (20) lies with its head in an opening (15) in the second component and the element (1) bears against the inside of the second component (13) via a disc (19).

6. A system according to claim 5, characterised by an axial distance between the tapped bush (8) and the disc (19).

7. A system according to any one of claims 1 to 6, characterised in that the annular flange (2) is detachably connected to a ring (16) associated with the first component (14) and enclosing the part of the element (1) with the radial flange (9).

8. A system according to any one of claims 1 to 4, characterised in that the annular flange (2) consists of metal or a rigid plastic.

9. A system according to claim 8, characterised in that the element (1) overlies or underlies the annular flange (10) on the top and bottom thereof by a lip-shaped annular bulge in each case.

10. A system according to any one of claims 1 to 9, characterised in that the cylindrical opening (5) of the element (1) is open towards both ends of the element.

11. A system according to any one of claims 5 to 10, characterised in that the outside diameter of the radial flange (9) is larger than the inside diameter of the annular flange (2).

12. A system according to claim 1, characterised in that the diameter of the element (1) in the zone between the annular flange (2) and the nearer end of the element (1) is larger than the diameter of the rubber spring element in the zone between the annular flange (2) and the more remote end of the element (1), in that the outside diameter of the radial flange (9) is larger than the larger outside diameter of the element (1) and in that the tapped bush (8) bears by the radial flange (9) against the flat outside of the element (1).

13. A system according to any one of claims 1 to 12, characterised in that the longitudinal bore of the tapped bush (8) has two sections (11, 12) of different inside diameters, the section having the smaller inside diameter (12) being associated with that end of the rubber spring element (1) to which the first annular flange (2) and the radial flange (9) of the tapped bush (8) are closer and this section is provided with a screwthread.

14. Use of a system according to at least one of claims 1 to 13 for fixing an armour plate as the relatively low-mass component (14) to a vehicle structure as the relatively heavy-mass component (13).

## Revendications

1. Dispositif de fixation élastique d'un premier élément de construction plan (14) de masse relativement faible sur un deuxième élément de construction quelconque (13) de masse relativement grande en utilisant un élément (1) en matériau ayant l'élasticité d'un ressort assemblé de façon amovible avec les deux éléments de construction (13, 14), l'assemblage étant effectué à l'aide d'une vis (20) vissée dans une douille taraudée (8) placée dans l'élément (1) en matériau ayant l'élasticité d'un ressort, cet élément (1) étant de forme essentiellement cylindrique et présentant un évidement cylindrique de traversée (5) s'étendant dans le sens de sa longueur, la douille taraudée (8) étant montée fixe dans cet évidement (5) et étant munie à l'une de ses extrémités d'une bride radiale (9) disposée du côté frontal de l'élément (1) dirigé vers le premier élément de construction (14), tandis que la vis (20), introduite à partir de l'autre côté frontal de l'élément (1), dirigé vers le deuxième élément de construction (13), à travers une ouverture de cet élément, est vissée dans le tronçon fileté (12) de la douille taraudée (8), cette vis appliquant ce côté frontal de l'élément (1), sous précontrainte axiale par l'intermédiaire de la bride radiale (9), sur le côté intérieur du deuxième élément de construction (13), une collerette (2) en saillie vers l'extérieur étant maintenue dans l'élément (1) à proximité du côté frontal de cet élément dirigé vers le premier élément de construction (14), cette collerette étant assemblée avec le premier élément de construction (14), une distance étant prévue dans la direction longitudinale de l'élément (1) entre la collerette (2) et le premier élément de construction (14), caractérisé en ce que l'élément (1) est assemblé avec le premier élément de construction (14) de façon permanente ou amovible, en ce qu'une unité de construction préfabriquée contient l'élément(s) en matériau en une seule pièce ayant l'élasticité d'un ressort, la douille cylindrique taraudée (8) et la collerette constituée sous forme de collerette annulaire (2), l'élément (1) en matériau ayant l'élasticité d'un ressort recevant, à l'état non précontraint, la collerette annulaire (2) de manière que le diamètre intérieur de cette collerette soit supérieur au diamètre extérieur de la douille taraudée (8) et inférieur au diamètre extérieur de l'élément (1), tandis que le diamètre extérieur de cette collerette est supérieur au diamètre extérieur de l'élément (1), en ce que, en outre, pour fixer la douille taraudée (8) à l'intérieur de l'élément (1), cette douille taraudée (8) est montée sans possibilité de torsion dans l'évidement (5) de l'élément (1) et en ce que, enfin, le premier élément de construction (14) recouvre l'élément cylindrique (1) en regardant dans la direction de l'axe de cet élément cylindrique.

2. Dispositif selon la revendication 1, caractérisé en ce que pour la fixation de la douille taraudée (8) à l'intérieur de l'élément (1), cette douille taraudée (8) est placée de façon que sa bride radiale (9) dirigée vers l'extérieur à une extrémité soit disposée dans une partie radiale élargie (6) de l'évidement (5) de l'élément (1) formée dans une extrémité de cet élément (1), la partie élargie (6) et la bride radiale (9) étant constituées en forme de polygones de mêmes dimensions.

3. Dispositif selon la revendication 1 ou la revendication 2, caractérisé en ce que pour la fixation de la douille taraudée (8) à l'intérieur de l'élément (1), cette douille taraudée (8) est montée à ajustage serré dans l'évidement (5) de l'élément (1).

4. Dispositif selon l'une des revendications 1 à 3, caractérisé en ce qu'un renflement annulaire (10) formé sur la douille taraudée (8) engrène dans une rainure annulaire (7) formée pour cela dans l'évidement (5) de l'élément (1).

5. Dispositif selon l'une des revendications 1 à 4, caractérisé en ce que la tête de la vis (20) est placée dans une ouverture (15) du deuxième élément de construction (13), l'élément (1) étant appliqué par l'intermédiaire d'une rondelle (19) contre la surface intérieure du deuxième élément de construction (13).

6. Dispositif selon la revendication 5, caractérisé par un intervalle axial entre la douille taraudée (8) et la rondelle (19).

7. Dispositif selon l'une des revendications 1 à 6, caractérisé en ce que la collerette annulaire (2) est assemblée de façon amovible avec une couronne (16) associée au premier élément de construction (14) et entourant la partie de l'élément (1) munie de la bride radiale (9).

8. Dispositif selon l'une des revendications 1 à 4, caractérisé en ce que la collerette annulaire (2) est constituée en métal ou en une matière plastique rigide.

9. Dispositif selon la revendication 8, caractérisé en ce que l'élément (1) comporte des lèvres en saillie annulaire (3, 4) qui viennent respectivement sur la surface supérieure et la surface inférieure de la collerette annulaire (2).

10. Dispositif selon l'une des revendications 1 à 9, caractérisé en ce que l'évidement cylindrique (5) de l'élément (1) débouche aux deux extrémités de cet élément.

11. Dispositif selon l'une des revendications 5 à 10, caractérisé en ce que le diamètre extérieur de la bride radiale (9) est supérieur au diamètre intérieur de la collerette annulaire (2).

12. Dispositif selon la revendication 1, caractérisé en ce que le diamètre de l'élément (1) dans la zone située entre la collerette annulaire (2) et l'extrémité voisine de cet élément (1) est supérieur au diamètre de l'élément entre la collerette annulaire (2) et l'extrémité éloignée de cet élément (1), en ce que le diamètre extérieur de la bride radiale (9) est supérieur au plus grand diamètre extérieur de l'élément (1) et en ce que la bride radiale (9) de la douille taraudée (8) repose sur le côté extérieur plan de l'élément (1).

13. Dispositif selon l'une des revendications 1 à 12, caractérisé en ce que l'alésage longitudinal de la douille taraudée (8) présente deux tronçons (11, 12) ayant des diamètres intérieurs différents, le tronçon (12) ayant le diamètre intérieur le plus faible étant associé à l'extrémité de l'élément (1) la plus rapprochée de la première collerette annulaire (2) et de la bride radiale (9) de la douille taraudée (8), ce tronçon étant muni d'un taraudage.

14. Utilisation d'un dispositif selon au moins l'une des revendications 1 à 13 pour la fixation d'une plaque de blindage en tant qu'élément de construction (14) de masse relativement faible sur la structure d'un véhicule en tant qu'élément de construction (13) de masse relativement grande.
